# EUROPEAN PATENT SPECIFICATION

(11) **EP 3 002 848 B1**
(45) Date of publication and mention of the grant of the patent: **02.11.2022**
(21) Application number: 15187747.9
(22) Date of filing: 30.09.2015
(51) Int. Cl.: H02J 3/46, H02J 3/14

(54) **DEMAND-SIDE GRID-LEVEL LOAD BALANCING AGGREGATION SYSTEM**
BEDARFSSEITIGES LASTENAUSGLEICHENDES AGGREGATIONSSYSTEM AUF NETZEBENE
SYSTÈME D'AGRÉGATION D'ÉQUILIBRAGE DE CHARGE À NIVEAU DU RÉSEAU CÔTÉ DEMANDE

(30) Priority: 30.09.2014 US 201414501346
(43) Date of publication of application: 06.04.2016
(73) Proprietor: Schneider Electric USA, Inc., Boston, MA 02108 (US)
(72) Inventor: Stanlake, Matthew, Victoria, British Columbia V8Z 2H7 (CA)
(74) Representative: Murgitroyd & Company

(56) References cited:
- WO-A2-2014/049173
- GB-A- 2 472 280
- US-A1- 2009 216 387
- US-A1- 2013 226 360
- US-A1- 2013 338 843
- US-A1- 2014 012 429
- US-A1- 2014 281 645

## Description

### BACKGROUND

### Technical Field

The present disclosure relates generally to balancing power in electrical power generation and distribution systems, and more particularly, to a demand-side load balancing mechanism in an electrical power generation and distribution system.

### Background Discussion

Conventional utility networks supply electricity for commercial, residential and industrial purposes. In a typical electrical distribution system, for example, electrical energy is generated by an electrical supplier or utility company and distributed to consumers via a power distribution network, also known as the electric power grid. The electric power gird is an interconnected system that maintains a balance between supply and demand while moving electricity from generation source to customer. Large amounts of electricity are difficult to store and therefore the amount generated and fed into the system are typically matched to the load to keep the system operating properly. The US patent application US2013/338843A1 discloses systems, methods and controllers for control of power distribution devices and systems.

### SUMMARY

Aspects and embodiments are directed to load balancing an electrical power generation and distribution system. In a first aspect of the invention, there is provided a system comprising: a load balance controller in communication with at least one energy generation source; at least one energy consumer; a plurality of load balancing devices, each load balancing device of the plurality of load balancing devices being configured to compensate for variations in frequency of power supplied from an electrical power grid; and a monitoring system configured to operate in real time and generate a signal regarding information related to one or more operational parameters of an electrical power grid, the one or more operational parameters including a frequency of power supplied by the electrical grid to the plurality of load balancing devices, each load balancing device of the plurality of load balancing devices being configured to receive the power supplied by the electrical grid and be at least partially controlled by the load balance controller over a network. The load balance controller is configured to: receive, from the monitoring system, the signal including a value of the frequency of power supplied by the electrical grid to the plurality of load balancing devices corresponding to a load balance state of the electrical power grid; identify a threshold value for the frequency value, the threshold value corresponding to a load balance state where an amount of electrical power generated by the at least one energy generation source is substantially equivalent to an amount of electrical power consumed by the at least one energy consumer; determine a deviation between the frequency value and the threshold value; receive operating constraints associated with each load balancing device of the plurality of load balancing devices, the operating constraints including current status, power consumption capacity, time period of availability, and one or more conditions related to availability; identify at least one load balancing device of the plurality of load balancing devices having at least one operating constraint of the received operating constraints that correlates with the deviation, wherein identifying includes aggregating in real time one or more identified load balancing devices of the plurality of load balancing devices such that a sum total of values corresponding to power consumption capacity of each respective load balancing device included in the aggregation is substantially equal to the deviation; and selectively control the power consumption of the identified at least one load balancing device to minimize the deviation by controlling the identified at least one load balancing device to either increase or decrease power.

According to at least one embodiment, the load balance controller may be further configured to use one or more statistical modeling techniques to determine at least one operating constraint associated with at least one load balancing device. The load balance controller may be further configured to receive a signal based on at least one operating constraint of at least one load balancing device, and be further configured to reduce at least a portion of a computational load of the load balance controller based on the signal.

According to at least one embodiment, the load balance controller may be further configured to determine that the value of the at least one operational parameter corresponds to a load balance state where an amount of electrical power generated by the at least one energy generation source exceeds an amount of electrical power consumed by the at least one energy consumer, generate a control signal for each respective load balancing device of the aggregated load balancing devices that causes each load balancing device to increase power consumption, and transmit the control signal to each respective load balancing device.

According to another embodiment, the load balance controller may be further configured to determine that the value of the at least one operational parameter corresponds to a load balance state where an amount of electrical power generated by the at least one energy generation source is below an amount of electrical power consumed by the at least one energy consumer, generate a control signal for each respective load balancing device of the aggregated load balancing devices that causes each load balancing device to reduce power consumption, and transmit the control signal to each respective load balancing device.

According to at least one embodiment, the load balance controller generates the control signal for at least one load balancing device of the aggregated load balancing devices to cause the at least one load balancing device to reduce power consumption without shutting off.

According to at least one embodiment, the at least one operational parameter is a frequency of the electrical power grid. According to some embodiments, the at least one energy generation source comprises at least one renewable energy source and an amount of electrical power generated by the at least one renewable energy source corresponds with the value of the at least one operational parameter.

In a second aspect of the invention, there is provided a method for load balancing an electrical power distribution system including at least one energy generation source, at least one energy consumer, a plurality of load balancing devices, each load balancing device of the plurality of load balancing devices being configured to compensate for variations in frequency of power supplied from an electrical power grid, a monitoring system configured to operate in real time and generate a signal regarding information related to one or more operational parameters of an electrical power grid, the one or more operational parameters including a frequency of power supplied by the electrical grid to the plurality of load balancing devices, each load balancing device of the plurality of load balancing devices being configured to receive the power supplied by the electrical grid and be at least partially controlled by the load balance controller over a network, and the method comprises: receiving, from the monitoring system, the signal including a value of the frequency of power supplied by the electrical grid to the plurality of load balancing devices corresponding to a load balance state of the electrical power grid; identifying a threshold value for the frequency value, the threshold value corresponding to a load balance state where an amount of electrical power generated by the at least one energy generation source is substantially equivalent to an amount of electrical power consumed by the at least one energy consumer; determining a deviation between the frequency value and the threshold value; receiving operating constraints associated with each load balancing device of the plurality of load balancing devices, the operating constraints including current status, power consumption capacity, time period of availability, and one or more conditions related to availability; identifying at least one load balancing device of the plurality of load balancing devices having at least one operating constraint of the received operating constraints that correlates with the deviation, wherein identifying includes aggregating in real time one or more identified load balancing devices of the plurality of load balancing devices such that a sum total of values corresponding to power consumption capacity of each respective load balancing device included in the aggregation is substantially equal to the deviation; and selectively controlling the power consumption of the identified at least one load balancing device to minimize the deviation by controlling the identified at least one load balancing device to either increase or decrease power consumption.

According to some embodiments, the method may further include using one or more statistical modeling techniques to determine at least one operating constraint associated with at least one load balancing device. According to at least one embodiment, the method may further include transferring at least a portion of a computational load associated with receiving the at least one operating constraint to at least one load balancing device.

According to some embodiments, the method may further include determining that the value of the at least one operational parameter corresponds to a load balance state where an amount of electrical power generated by the at least one energy generation source exceeds an amount of electrical power consumed by the at least one energy consumer, generating a control signal for each respective load balancing device of the aggregated load balancing devices such that the control signal causes each load balancing device to increase power consumption, and transmitting the control signal to each respective load balancing device.

According to other embodiments, the method may further include determining that the value of the at least one operational parameter corresponds to a load balance state where an amount of electrical power generated by the at least one energy generation source is below an amount of electrical power consumed by the at least one energy consumer, generating a control signal for each respective load balancing device of the aggregated load balancing devices such that the control signal causes each load balancing device to reduce power consumption, and transmitting the control signal to each respective load balancing device.

Still other aspects, embodiments, and advantages of these example aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed aspects and embodiments. Embodiments disclosed herein may be combined with other embodiments, and references to "an embodiment," "an example," "some embodiments," "some examples," "an alternate embodiment," "various embodiments," "one embodiment," "at least one embodiment," "this and other embodiments" or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a block diagram of an example energy load balancing system in accordance with aspects of the invention;
FIG. 2 is a flow chart of an example of a method for energy load balancing in accordance with aspects of the invention; and
FIG. 3 is a functional block diagram of one example of a load balancing control system in accordance with aspects of the invention.

### DETAILED DESCRIPTION

The electrical needs of consumers vary continuously, with different types of electricity users demanding power in different amounts and at different times. This creates a load profile that varies by the time of day and the season. The base load requirement generally refers to the minimum level of demand on an electrical power supply system. Base load power plants are typically devoted to the production of the base load power supply and are used to meet some or all of a region's unvarying energy demand generated throughout the day. In general, base load power plants do not change production to match power consumption demands, since it is more economical to operate them at constant production levels. Therefore, peaks or spikes in customer power demand are handled by smaller and more responsive types of power plants called peaking power plants. In general, peak power plants only operate when there is peak demand, such as in the early evening, and because they supply power only occasionally, the power they supply commands a much higher price per kilowatt hour than base load power.

Utilities, which run the electrical power grid, need to constantly balance the supply of energy on the grid with current demand. This balance has traditionally been maintained through supply control: if demand increases, additional generators are brought online, and if demand decreases, generators are idled. This approach allows large power generation stations like nuclear or coal-fired plants to provide the base load for the grid. These plants efficiently produce large amounts of energy at a constant rate, but are incapable of ramping up and down quickly. Peak demand may exceed the maximum supply levels that the base load power stations can generate, resulting in power outages and load shedding. As mentioned above, utilities use peaking stations, which are typically gas-fired combustion turbines to handle the peak load during times of highest demand.

Renewable energy sources, such as wind and solar energy may be intermittent and variable in nature. The direction and velocity of wind may vary, and solar energy may be readily obscured by cloud cover which may significantly reduce the output of solar panels for brief or extended periods of time. This leaves utilities uncertain as to how much of their capacity can be met by renewable energy sources. In contrast, traditional sources of power generation, such as oil, coal, gas-fired generation, hydroelectric generation, and nuclear generation are steady suppliers of large amounts of power that gets pushed through the transmission network to the distribution network. Further, many jurisdictions have incentives to promote the growth of renewable energy sources. For example, these incentives may guarantee that the utility will buy any power the renewable can produce. This also impacts the traditional structure of the distribution grid, since if the renewable energy sources can meet the demand, then the utility is forced to idle their large power generation stations. However, if the renewable energy sources are unable to keep up with the load, then the large power generation stations are incapable of ramping up quickly.

Utilities detect imbalances within the system by measuring or otherwise detecting the frequency of the electrical power grid. The utility frequency, otherwise referred to as the power line frequency, or simply frequency, is the frequency of the oscillations of alternating current (AC) in an electric power grid transmitted from a power plant to the end-user. In some regions of the world, the frequency of the power grid is 50 Hz, and in other regions, such as North and South America, the frequency is 60 Hz. As the demand on the grid exceeds the supply, the frequency will decrease, acting as a cue for the utility to increase generation. As the supply exceeds the demand, the frequency increases. This mode of control model depends on relatively slow changes to the demand profile and a stable controllable supply. The utility is therefore typically only capable of maintaining a balance by throttling power generation up and down. This supply-side management approach to power generation and distribution largely ignores the demand-side of the equation. Further, utilities are ill-equipped to handle situations where the supply of energy can vary over short periods of time.

Load management, also known as demand-side management, is the process of balancing the supply of electricity on a network with the electrical load by adjusting or controlling the load rather than the power station output. Typical demand response programs reduce the load at known times in the future based on the expected demand and supply situation. For example, the utility generally knows ahead of time that if the temperature is expected to hit 35 °C, that the peak load at 2 pm will likely be near 45,000 MW based on historical data.

By way of introduction, aspects and embodiments of this disclosure relate to systems and methods for providing a demand-side energy load balancing mechanism that is configured to respond in real time. Aspects and embodiments disclosed herein include a load balancing system that is configured to aggregate many small loads from multiple customer sites to provide a responsive demand-side load balancing system that may be used to augment an existing supply-side mechanism. The combined effect of the small loads allows the system to scale upward and downward in a second-by-second time scale to adjust for imbalances between the supply and demand of electrical power.

The aspects disclosed herein in accordance with the present invention, are not limited in their application to the details of construction and the arrangement of components set forth in the following description or illustrated in the accompanying drawings. These aspects are capable of assuming other embodiments and of being practiced or of being carried out in various ways. Examples of specific implementations are provided herein for illustrative purposes only and are not intended to be limiting. In particular, acts, components, elements, and features discussed in connection with any one or more embodiments are not intended to be excluded from a similar role in any other embodiments.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated reference is supplementary to that of this document; for irreconcilable inconsistencies, the term usage in this document controls. Moreover, titles or subtitles may be used in the specification for the convenience of a reader, which shall have no influence on the scope of the present invention.

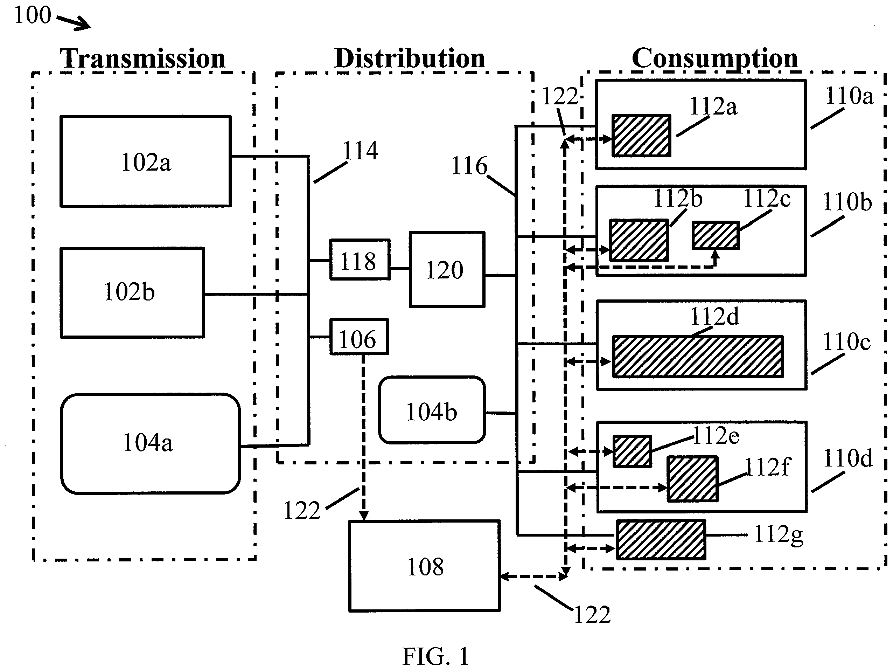

FIG. 1 is a block diagram of one embodiment of an energy load balancing system, generally indicated at 100. The energy load balancing system 100, otherwise referred to as the load balancing system, comprises two power generators, indicated at 102a and 102b, two renewable energy sources, indicated at 104a and 104b, a monitoring system 106, a load balance controller 108, at least one energy consumer indicated at 110a-110d, at least one load balancing energy consuming device, indicated at 112a-112g, a transmission network 114, a distribution network 116, and a load balancing network 122.

Generally speaking, and in reference to FIG. 1, the load balancing system 100 has three main regions that each include one or more of the aforementioned components: the transmission region, the distribution region, and the consumption region. In the transmission region, the bulk transfer of electrical power generated by the energy generation sources (102a, 102b, and 104a) is transmitted to the distribution region using transmission lines, which are interconnected with each other to form the transmission network 114. In the distribution region, one or more transformers 118 and substations 120 distribute the electrical power transmitted by the transmission network 114 to distribution lines, which are interconnected to form the distribution network 116. The substations 120 lower the transmission voltage through the use of the transformers 118. The combination of the transmission network 114 and the distribution network 116 is generally referred to as the "power grid" or simply as "the grid." In the consumption region, electrical power distributed from the distribution network 116 is used by different types of customers, such as residential, commercial, and industrial customers.

As used herein, the term "power generator" and "power station" (e.g., power generators 102a and/or 102b) are used interchangeably and generally refer to an industrial facility for the large generation/mass distribution of electric power, although as used herein, this term also refers to peaking plants, as discussed above. These facilities typically supply all or a substantial part of the energy required for base load operations. In general, these types of power stations burn fossil fuels such as coal, oil, and natural gas to generate electricity, although some use nuclear, hydroelectric, or steam power, and peaking plants may use gas-fired combustion turbines, as previously mentioned. Power generators 102a and 102b in FIG. 1 may be any one of these types of power producers.

As used herein, the terms "renewable energy source" and "renewables" (e.g., renewable energy source 104) are used interchangeably and generally refer to any one or more technologies that utilize replenishable energy sources such as energy from water, wind, sun, geothermal, and biomass sources such as energy crops. Non-limiting examples of renewable energy sources include wind turbines, photovoltaics, such as solar panels, biomass and biogas plants, geothermal energy sources, and hydroelectric energy sources. According to a further aspect, these types of energy sources may be characterized by their intermittent availability. Referring to FIG. 1, renewable energy source 104a may be a large wind turbine farm or a large solar power plant and is positioned within the "transmission" region of the system because it produces enough electrical energy to be distributed to a large area. In contrast, renewable energy source 104b may be a much smaller source of renewable energy, such as a wind turbine farm with one to four wind turbines, or a home equipped with an array of solar power panels. These types of renewable energy sources generally produce power that is directly connected within the distribution network 116.

As used herein, the terms "energy consumer," "energy user," "customer," and "consumer" (e.g., energy consumer 110a-110d) are used interchangeably and generally refer to one or more individuals, facilities, businesses, and any other entity that consumes energy, either directly or indirectly, from an energy generation source. Non-limiting examples of energy consumers include factories, businesses, residences, medical centers, municipalities, agricultural entities such as farms, transportation, and the like. Each of energy consumers 110a-110d may include any one or more of these types of energy consumption.

In accordance with certain aspects, the term "energy generation source" refers to any energy source, whether it is a power station, such as power generators 102a and 102b in FIG. 1, a renewable energy source, such as renewable energy sources 104a and 104b in FIG. 1, or any other source of energy.

Referring back to FIG. 1, the energy load balancing system 100 also includes load balancing energy consuming devices 112a-112g. As used herein , the terms "load balancing energy consuming device" and "load balancing device" or "balancing device" are used interchangeably and as explained in further detail below, generally refer to one or more power-consuming and/or storing devices that are capable of responding to a load imbalance without significantly impacting their own performance. In accordance with some embodiments, the load balancing devices at least partially compensate for variations in frequency and/or magnitude of power supplied from the power supply network, and may therefore be configured to balance at least a portion of the load on the grid. In accordance with other embodiments, the load balancing devices are configured to completely or near-completely compensate for variations in frequency and/or magnitude of power supplied from the power supply network, and may therefore be configured to balance the overall load on the grid. Non-limiting examples of load balancing devices include refrigerators, HVAC units, production machinery, ovens, pumps, lighting, escalators, furnaces, irrigation systems, and the like. According to at least one embodiment, at least one load balancing device is capable of storing or otherwise "stockpiling" energy. For example, refrigeration units and HVAC units are capable of being turned off and on for short periods of time without affecting their operation. For example, depending on the type of unit, type of building construction, and needs of the user, an HVAC unit for an office or domestic residence may be turned off for certain intervals of time as long as the temperature of the rooms remains within a certain range.

As mentioned above, the utility may be required to integrate renewable energy into the power grid, even if it is not immediately needed because of contracts with renewable energy providers. As a consequence, one or more of the load balancing devices 112a-112g may need to consume additional energy until the power generators 102a and/or 102b are able to reduce energy production.

In accordance with certain aspects, the load balancing devices are configured to turn off, to consume less power, and to turn on, to consume more power, without significantly affecting their overall performance. This functionality allows the load balance controller 108, discussed further below, to integrate these devices into a balancing scheme that uses energy produced by the energy generation sources more effectively. For example, a load balancing device may include lighting systems, such as lighting devices in public areas, such as lobbies, street lights, or parking areas. These lights may be turned on during the day without causing any significant impact to their overall operation. Another example may be an ornamental water fountain display, which may be turned on at varying times, including non-business hours and/or at night.

According to a further aspect, the load balancing device may include one or more devices that are configured with adjustable speed drive systems. These types of devices are configured to consume more or less power by adjusting the voltage supply, without being restricted to a bimodal on/off status. For example, instead of being shut off completely, the voltage supply to a motor included in an escalator may be decreased, thereby decreasing its speed and consuming less power. In the alternative, instead of being run at maximum capacity, the voltage supply may be increased so that the speed increases and more power is consumed. Other non-limiting examples of devices with variable speed drives include fans, pumps, and compressors.

One or more of the load balancing devices 112a-112g may be located or otherwise associated with an energy consumer 110a-110d. For example, referring to FIG. 1, load balancing device 112a is positioned within energy consumer 110a. Energy consumer 110a may be a residence, such as a home, and load balancing device 112a may be a refrigerator within the home. Multiple load balancing devices may also be positioned or otherwise associated with a single energy consumer. For example, energy consumer 110b may be a business or residence that includes at least two load balancing devices 112b and 112c, such as a refrigerator and an HVAC unit. As discussed further below, each of the load balancing devices 112a-112g may be configured to provide varying amounts of power balancing capability, depending on one or more of their respective characteristics, such as the type of device and nature of use. Thus, the load balancing devices 112a-112g of FIG. 1 are of varying sizes, indicating this variability in their respective contribution to the load balance.

According to another embodiment, one or more load balancing devices 112a-112g may not be directly associated with an energy consumer 110a-110d, but rather function as a stand-alone device that is connected to the power grid. For example, load balancing device 112g is in communication with the load balance controller 108, as discussed further below, but is not otherwise associated with an energy consumer 110a-110d. One such example of a device is an electrically powered vehicle. In certain instances, these vehicles may be parked and powered at designated charging stations that are separate from a residence, which is considered, for the purposes of this disclosure, to be a more traditional energy consumer.

According to at least one embodiment, one or more load balancing devices 112a-112g may be configured to store or otherwise accept energy for later use. Non-limiting examples of such devices include rechargeable batteries, generators, uninterruptible power supplies, electric vehicles, and the like. Other types of load balancing devices that store energy include solid state batteries which use electrochemical cells equipped with electrodes, and flow batteries which use energy stored in an electrolyte solution. Other examples include flywheels that harness rotational energy, compressed air energy storage, and thermal energy storage devices.

Referring back to FIG. 1, the energy generation sources (e.g., 102a, 102b, 104a, and 104b) generally refer to the "supply-side" of the energy load balancing system 100, and the consumption region (e.g., 110a-110d and 112a-112g) generally refers to the "demand-side" of the system 100. The load balance controller 108 is responsible for maintaining a balance between the energy produced by the supply-side and the energy consumed by the demand-side through the use of a monitoring system 106 and one or more of the load balancing devices 112a-112g. Further, it is to be appreciated that although FIG. 1 indicates a single load balance controller 108, multiple load balance controllers may be used for the purposes of balancing the energy load. For example, a load balance controller may be used for balancing a portion of the power grid, while one or more other load balance controllers may be used for load balancing the remaining portions of the grid. According to another example, multiple load balance controllers in communication with one another may be used to balance the entire grid.

The monitoring system 106 includes one or more monitors that perform measurements of or otherwise determine one or more parameters related to the power grid. For example, in FIG. 1, the monitoring system 106 measures the value of one or more parameters, such as voltage, current, frequency, kWh, and the like, of the transmission network 114. More generally, the monitoring system includes one or more devices capable of at least sampling, collecting and/or measuring and recording, and in certain instances transmitting, one or more operational characteristics and/or parameters related to the energy system 100. Such operational parameters may be related to power events, power quality events, current, voltage, demand, energy, waveforms, harmonics, transients, and other power disturbances. Non-limiting examples of such devices include metering devices, power meters, trip units, relays, motor control units, circuit monitors, and sensors, such as optical sensors, thermal sensors, acoustic sensors, capacitive sensors, etc. Non-limiting examples of parameters that may be measured or otherwise determined by the monitoring system include current measurements of the load energy usage (e.g., voltage, current, power, frequency, etc.), environmental measurements (e.g., temperature, humidity, etc.), and the power profile of the load. Further, it is to be appreciated that although FIG. 1 indicates that monitoring system 106 is positioned in communication with the transmission network 114, the monitoring system 106 may be positioned at any location, including multiple locations, within the system 100 for the purposes of obtaining one or more of the aforementioned operational characteristics and parameters.

In accordance with one embodiment, the load balance controller 108 may be configured to use one or more operating parameters that are not supplied by the monitoring system. For example, a user or computer system may convey information to the load balance controller that may be used in performing a load balancing act. For example, the operating parameter may convey information related to load operating schedules (e.g., load requirements or restrictions during certain hours of the day and/or days of the week).

According to at least one embodiment, the monitoring system 106 generates a signal regarding information related to one or more operational parameters of the power grid, such as the frequency of the transmission network 114. According to at least one embodiment, the monitoring system 106 transmits this information through the load balancing network 122 using one or more communication methods, as discussed further below. According to certain aspects, the load balancing network 122 may function as a communications network and therefore may be a wired or wireless network, or may be a combination of wired and wireless technology, using any of a variety of methods, protocols, and standards, including, among others, token ring, Ethernet, wireless Ethernet, Bluetooth, TCP/IP, UDP, HTTP, FTP, SNMP, SMS, MMS, SS7, JSON, SOAP, AND CORBA.

According to a further aspect, the components used by the load balancing network 122 may include hardware components, software components, or a combination of both. In certain instances, these components physically and logically couple the monitoring system 106, the load balance controller 108, and the load balancing devices 112a-112g. As discussed further below, this physical and logical coupling enables one or more of these components, such as the load balance controller 108, to both communicate with and in some instances, power or control the operation of other components, such as the load balancing devices 112a-112g. The hardware and software components of the load balancing network 122 may implement a variety of coupling and communication techniques. According to some examples, the load balancing network 122 uses leads, cables, or other wired connectors as conduits to exchange information. In other examples, the load balancing network 122 may use wireless technologies such as radio frequency or infrared technology. According to a further aspect, software components included in the load balancing network 122 may enable one or more of the monitoring system 106, the load balance controller 108, and the load balancing devices 112a-112g to communicate with each other. These software components may include elements such as objects, executable code, and populated data structures. According to some embodiments, these software components may be part of the monitoring system 106, the load balance controller 108, and/or the load balancing devices 112a-112g.

The load balance controller 108 generally functions to use the compensating capability of one or more of the load balancing devices 112a-112g on the demand-side to alleviate imbalances in the supply-side of the system 100 based on information it receives from the monitoring system 106 and operating constraints received from the load balancing devices 112a-112g. For example, if one or more of the renewable energy sources 104a and 104b are generating electrical power at a rate or level that exceeds the capacity of the network, i.e., power supplied exceeds power consumption, then the load balance controller 108 can request or otherwise signal to one or more of the load balancing devices 112a-112g to power up or otherwise place the device in a power consumptive state. Under certain circumstances, this avoids powering down or otherwise significantly impacting the large base load power generators 102a and 102b. In the alternative, if one or more of the renewable energy sources 104a and 104b are not generating power at a rate or level to meet the needs of the network, i.e., power supplied fails to meet power consumption, then the load balance controller 108 can signal to one or more of the load balancing devices 112a-112g to power down or otherwise place the device into a power reduction state. Under certain circumstances, this may avoid powering up one or more peaking stations to meet the energy demands of consumers 110a-110d, and/or may prevent a brown-out while the power grid waits for a peaking station to come online.

The load balance controller 108 may aggregate or otherwise combine one or more of the load balancing devices 112a-112g to provide the responsive demand-side load balancing mechanism. In certain instances, this mechanism may function to augment an already existing supply-side load balancing mechanism. As explained further below, each of the load balancing devices 112a-112g may function to provide a small load or effect on the imbalance between the supply and demand of electrical power. According to certain aspects, when one or more of these loads are aggregated together in real time, their combined effect allows them to scale upward and downward in a second-by-second time scale to meet the load balancing requirements of the system. As used herein, the terms "real time" and "near real time" are used interchangeably and refer to processes that are completed in a matter of a few seconds or less. In certain aspects, real time refers to a signal that is continuously being sent and received, with little or no time delay. The time delay may be a delay introduced by, for example but without limitation, automated data processing or network transmission, between occurrences of an event, and the like.

According to a further aspect, the load balance controller 108 receives or otherwise obtains information regarding one or more characteristics of each load balancing device in order to properly aggregate the load balancing devices and thereby provide the proper load balance. According to certain aspects, one or more of these characteristics may define the operating constraints of the device (as discussed further below), such as information regarding availability, i.e., current status, and the impact of turning the load balancing device on and off, including the current status of the load balancing device, and how much energy the device could potentially store, consume, or not consume, i.e., power consumption capacity.

Non-limiting examples of operating constraints of the load balancing device may include the current operational status (e.g., "off," "on," "standby," "power-up," "power-down," or some other operating mode), the maximum and minimum power consumption capacity, the power profile, operation flexibility (e.g., the device can operate any time between time X and Y, but must run once every Z hours, interruptibility), user override signal (e.g., indication from a user to remove the device or to use the device), priority (relative to other devices), operation dependencies (e.g., devices A and B must operate together). For example, the load balance controller 108 may obtain information regarding the device's time period of availability, such as how long the load balancing device can be turned on or off before performance is affected. For instance, a refrigerator may be powered off for a certain period of time before the interior temperature raises to a level that impedes the purpose of the refrigerator, i.e., to keep perishable matter from perishing and/or to keep items substantially frozen. In addition, opening and closing the compartment doors of the refrigerator allows the inner temperature to increase at a more rapid rate, and therefore the operating constraints may include usage information regarding the device, such as that the refrigerator's compartment door is substantially closed during a weekday (since no one in a household is home during weekdays), but during evenings and weekends, the compartment door is open and closed more often. The opposite may be true of a refrigerator located in a business, where the compartment door is opened with some degree of frequency during the weekdays, but is generally kept shut during evening hours and on weekends. According to an example that uses a lighting system as a load balancing device, an operating constraint may include information that one or more of the lights in the system may not be turned off during the evening hours when it is dark. The operating constraints may indicate one or more conditions under which the load balancing device may operate in a selected state, e.g., on, off, or otherwise increase or reduce power consumption. For example, as discussed further below, the operating constraint may include the extent or degree to which a device may be powered up and down. The load balance controller 108 may selectively control the load balancing device by generating and sending a control signal to the device that corresponds to each respective state.

According to a further aspect, another example of an operating constraint may include how rapidly a device may be cycled on and off. For instance, using the refrigerator example from above, the motor that operates the compression cycle may only be powered on and off at certain time intervals without burning out or otherwise shortening the lifespan of the motor.

According to another aspect, another example of an operating constraint may include the extent or degree to which a device may be powered up and down. This operating constraint may be particularly relevant for load balancing devices equipped with variable speed drives, as discussed above. For example, instead of being shut off completely, an escalator may simply be slowed down to consume less power, or sped up to consume more power by adjusting the amount of supplied power. According to another example, an air conditioning unit may have three different modes; a "high" power mode requiring a high amount of energy to run the air conditioner at maximum capacity, a "low" power mode requiring a lower amount of energy to run the air conditioner at a level less than maximum capacity, and an "off' mode requiring no energy.

According to yet a further aspect, another example of an operating constraint may include how much energy a device may store. For instance, an electric or hybrid vehicle may include a battery that is capable of storing energy provided by the energy generation sources. Thus, in instances where the energy supply exceeds the demand, the load balance controller 108 may use the electric or hybrid vehicle in a load balancing event to increase the demand and thereby help balance out the system.

According to a first example, a load balancing device may be an HVAC unit, where non-limiting examples of the operating constraints may include the current operation mode, availability, the minimum and maximum temperatures that are acceptable for the interior space(s) of the building the HVAC unit is positioned within, occupancy information (e.g., the temperatures only need to be maintained during weekdays and during business hours), the outdoor air temperature and humidity, and/or the indoor air temperature and humidity. As discussed further below, the load balance controller 108 may use one or more of these constraints to determine if the HVAC unit is eligible for participation in a demand-side load balancing event. Further, the system may be able to determine, for example, by using statistical modeling techniques, how long the HVAC unit can participate in the load balancing event(s) before one or more of the operating constraints is violated.

According to a second example, the load balancing device may be a reservoir, where non-limiting examples of the operating constraints include the current holding capacity of the reservoir, the minimum and maximum holding capacity of the reservoir, and the output flow rate. The load balance controller 108 may subsequently use one or more of these values to signal to the high-lift pumps to operate and fill the reservoir up to the maximum level, or to stop and let the reservoir drain up until the minimum level is met.

According to a third example, the load balancing device may be a parking lot equipped with a lighting system. In this instance, an example of an operating constraint may include the current time of day and how much energy one or more of the lights in the system consume when they are turned on. The load balance controller may then use this information to determine if one or more components of lighting system can participate in a load balancing event.

According to some embodiments, the load balance controller 108 is configured to receive one or more of the operating constraints associated with each load balancing device. In certain instances, some or all of this information may be provided in real time to the load balance controller 108. Further, the operating constraints may be supplied by the load balancing device, such as through the use of sensors, or any other device, such as a computer system processor associated or otherwise included with the load balancing device. The operating constraints may also be supplied to the load balance controller 108 through a user, such as an individual who is an energy consumer and/or energy system operator.

In accordance with some embodiments, the load balance controller 108 uses one or more of the operating constraints associated with each load balancing device to provide a responsive demand-side load balancing mechanism. For instance, one or more of the load balancing devices 112a-112d may be combined to be collectively powered off (or powered on) for a first period of time, such as for the duration of a few seconds. This action may be consecutively followed by load balancing devices 112c-112g being combined and collectively powered off (or on) for a second period of time, which may also be a few seconds in duration. According to a further aspect, the load balance controller 108 may "switch" through one or more load balancing devices 112a-112g at rapid time intervals, e.g., second-by-second, or at longer time intervals, e.g., minute-by-minute or hour-by-hour, to achieve a maximum demand-side balancing effect. Each combination of one or more devices 112a-112g may be based on one or more of their respective individual operating constraints. For instance, one or more of the operating constraints associated with load balancing devices 112a and 112c may dictate that load balancing device 112a can only be powered down for a few seconds and between longer time intervals than load balancing device 112d,which may be powered down for longer than a few seconds and between shorter time intervals. According to another aspect, the combination of devices may also be based on their collective operating constraints. For instance, the operating constraints of load balancing device 112e may dictate that it cannot be powered off (or powered on) at the same time as load balancing device 112f. According to a further aspect, the combination of devices may include load balancing devices where one or more of the devices are configured to consume varying amounts of power, i.e., the device is not simply turned off or on. For example, the combination may include one or more load balancing devices equipped with variable speed drives, as discussed above.

In accordance with at least one embodiment, the load balance controller 108 communicates or otherwise exchanges information back and forth with the load balancing devices 112a-112g through the use of the load balancing network 122. The load balancing network 122 is therefore configured to both send information, such as a control signal from the load balance controller 108 to the load balancing devices 112a-112g, and to receive information, such as one or more operating constraints from the load balancing devices 112a-112g to the load balance controller 108. For example, load balancing devices 112a-112g may generate signals or otherwise convey information regarding their respective operating constraints, which may be transmitted to the load balance controller 108 by the load balancing network 122 using one or more of the communication methods and/or components discussed above. In response to the received information from the load balancing devices 112a-112g and the monitoring system 106, the load balance controller 108 may generate a control signal that corresponds to increasing or decreasing power consumption, which is also transmitted to one or more of the load balancing devices 112a-112g by the load balancing network 122.

According to some embodiments, the load balance controller 108 may also coordinate, broker, sell, and/or distribute energy between the energy generation sources on the supply-side and the energy consumers on the demand-side of the system. According to a further aspect, the load balance controller 108 may be in communication with one or more individuals, facilities, and business entities that are responsible for coordinating, brokering, selling, and/or distributing the energy between the energy generation sources and the energy consumers.

According to at least one embodiment, operation of the energy load balancing system 100 shown in FIG. 1 includes one or more of power generators 102a and 102b generating electrical power which is distributed to one or more of the energy consumers 110a-110d and one or more of the load balancing energy consuming devices 112a-112g through the power grid comprising the transmission network 114 and the distribution network 116. In addition, one or more of the renewable energy sources 104a and 104b may also generate electrical power that is also distributed to the demand-side of the load-balancing system 100 through the power grid.

According to a first example scenario, one or more of the energy generation sources, including renewable energy sources 104a and 104b, are unable to keep up with the energy demands of energy consumers 1 10a-110d. For instance, there may be considerable cloud cover, thereby decreasing or ceasing the amount of energy generated by photovoltaic sources, and/or the wind speed may drop to levels such that wind turbines produce negligible amounts of energy. As a consequence, the frequency of the system 100 decreases or drops below a threshold value, which is in turn detected or otherwise determined by the monitoring system 106 connected to the power transmission network 114. In response, the monitoring system 106 signals or otherwise communicates to the load balance controller 108 through the load balancing network 122 that the energy demands exceed the energy supplied. For example, the load balance controller 108 may use the measured frequency value obtained by the monitoring system 106 to calculate or otherwise determine the value of the deviation or difference between a threshold value for the frequency of the transmission network 114 and the actual measured or detected value. According to this example, the load balance controller 108 responds to the value of the deviance by aggregating one or more of the load balancing devices 112a-112g so that (based on their operating constraints) the combined value of their various respective levels of reduced power consumption approach the value of the deficit, i.e., minimize the deviation. The load balance controller 108 may then signal to the targeted devices to decrease their energy consumption, e.g., by powering down or slowing down. The resulting decrease in energy consumption contributes toward increasing the frequency of the transmission network 114 to a value that approaches or is substantially equal to the threshold frequency value. This increase in frequency may be detected by the monitoring system 106 and, in a similar manner as just described above, relay this information to the load balance controller 108, which may in turn continue to send control signals to one or more aggregated load balancing devices 112a-112g (which may include a different set of aggregated devices). This iterative process may continue until the value of the measured frequency is substantially equal to the threshold value.

According to certain aspects, the monitoring system 106 is configured to detect the frequency of the power grid and report any deviation from the threshold value to the load balance controller 108 in real time or near real time, which in certain instances translates to a second-by-second time scale. In addition, the load balance controller 108 may respond by aggregating one or more load balancing devices 112a-112g and send signals or otherwise control the power consumption of the aggregated devices in real time or near real time. In the alternative, the monitoring system 106 and load balance controller 108 may be configured to function using longer time intervals, such as minutes or hours.

According to a second example scenario, one or more of the renewable energy sources 104a and 104b may generate more power than can be met by the energy demands of consumers 110a-110d. For example, there may negligible cloud cover, which increases the amount of energy generated by photovoltaic sources, and/or the wind speed may remain at a high level for extended periods of time. The frequency of the transmission network 114 may therefore increase to a value that is above the threshold value. This increase is detected by the monitoring system 106 through the transmission network 114, which in turn conveys this value to the load balance controller 108 through the load balancing network 122. In a similar manner as described above in reference to the first example scenario, the load balance controller 108 calculates the deviation between the measured and threshold frequency values, and responds by aggregating one or more of the load balancing devices 112a-112g (based on one or more of their respective operating constraints) so that the combined value of their various respective levels of available power consumption minimizes the deviation. The load balance controller 108 then signals to each of the aggregated devices to increase their energy consumption, e.g., by powering up or speeding up. The resulting increase in energy consumption may therefore cause the measured frequency value of the transmission network 114 to decrease to a value that approaches or is substantially equal to the threshold frequency value. As discussed above, the process may iterate until the threshold frequency value is met.

As mentioned previously, the load balance controller 108 aggregates the load balancing devices 112a-112g based on one or more of the energy load balancing device's respective operating constraints. For instance, load balancing devices 112a, 112e, and 112g may be aggregated by the load balance controller 108 because in combination, their respective amounts of decreased (or increased) energy consumption cause the frequency to meet or at least approach the threshold value. The selected set of load balancing devices 112a-112g aggregated by the load balance controller 108 may change from one time interval, including a time interval that corresponds with real time, to the next consecutive time interval, depending on the respective operational constraints of the load balancing devices and the measured frequency.

It is to be appreciated that in either of the examples discussed above, the monitoring system 106 may use measurements or other data indicative of the load balance that are taken elsewhere in the system 100 and convey this information to the load balance controller 108. For instance, the monitoring system 106 may be in communication with the distribution network 116 and transmit this data to the load balance controller 108. As mentioned above, the monitoring system 106 may convey multiple data types and values to the load balance controller 108 from one or more locations in the load balancing system 100. Further, other parameters besides the frequency of the power grid may be used by the load balance controller 108 to respond to a load imbalance.

According to another embodiment, the load balance controller 108 may send signals or otherwise request that the power generators 102a and 102b increase or decrease their respective power production based on an analysis of the load balance. This approach may allow the load balance controller 108 to use the supply-side of the system in combination with or in lieu of the demand-side to balance the load. For example, the load balance controller 108 may determine, based on one or more algorithms and/or other information, that the amount or rate of energy provided from renewable energy sources 104 is reliable enough to halt the use of one or more load balancing devices 112a-112g, and rely solely on the supply-side of the system to balance the energy load.

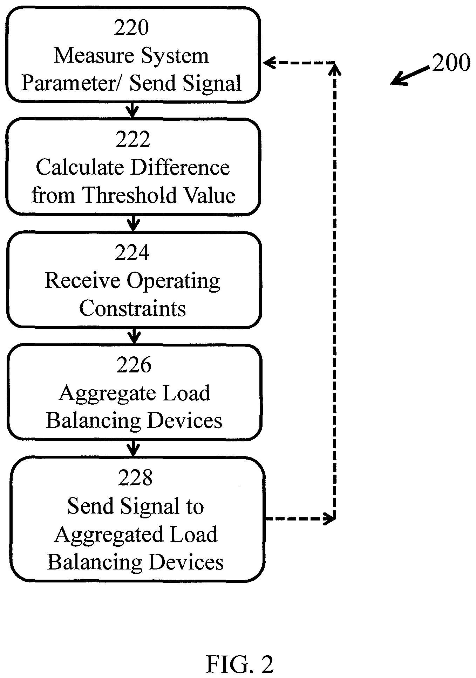

FIG. 2 illustrates an embodiment of an energy load balancing process 200. The energy load balancing process 200 enables one or more controllers (e.g., load balance controller 108) to maintain a balance between the energy supply and energy demand within one or more locations of an electrical power generation and distribution system (e.g., load balancing system 100). According to certain aspects, the energy load balancing process 200 may mitigate one or more effects caused from an unpredictable supply of energy provided by renewable energy sources.

In act 220, the monitoring system (e.g., monitoring system 106) measures one or more parameters of the electrical power generation and distribution system, such as the frequency of the power grid. As discussed above, the monitoring system may include devices such as metering devices, power meters, trip units, relays, motor control units, circuit monitors, and sensors, etc. One or more of these devices may be configured to measure parameters such as the voltage, current, frequency, kWh, and the like, of one or more components of the system, such as the transmission network 114. In addition, the monitoring system may also generate a signal corresponding to the measured value and transmit the signal to the controller (e.g., load balance controller 108), for example, using a network (e.g., load balancing network 122).

In act 222 the controller (e.g., load balance controller 108) uses the measured value of the parameter, such as the frequency, obtained in act 220 and compares it to a threshold value, for example, by calculating the deviation, i.e., the difference between the measured value and the threshold value. The threshold value for the parameter of interest may be determined based on a standard set by a region, and/or may also be based on other factors, such as safe operating parameters of one or more components of the system. For example, the threshold frequency value for the power grid may be 60 ±0.01 Hz if the electrical power system is located in the Americas.

In act 224, the controller receives one or more operating constraints from one or more load balancing devices (e.g. load balancing devices 112a-112g). As discussed above, this information may include the impact of turning the load balancing devices on and off, and therefore may contain power consumption information. In addition, this information may also convey information regarding sets or subsets of separate devices that may be used in combination with each other. As discussed previously, this information may also be transmitted to the controller using the network.

According to certain aspects, the controller may also update operating constraints based on historical data or other data relating to previous experiences regarding one or more of the load balancing devices. For example, an operating constraint on an HVAC unit may specify that the minimum temperature is 21 °C. Historical data indicates, however, that every time the HVAC unit takes part in a load balancing event and the temperature reaches 22 °C, the automatic control is overridden and the temperature is manually increased. As a result, the controller sets the threshold value at 22 °C for this device in future load balancing events.

In act 226, the controller aggregates one or more of the load balancing devices based on the operating constraints received in act 224 and the calculated value determined in act 222 regarding the deviation (if any) from the threshold value. For example, when using frequency of the power grid as the system parameter, if the calculated value indicates that the frequency is increasing, then the controller aggregates load balancing devices with the goal of increasing power consumption. Likewise, if the calculated value indicates that the frequency is decreasing, then the controller aggregates load balancing devices with the goal of decreasing power consumption.

In act 228, the controller generates and sends a signal corresponding to the desired response (e.g., increase or decrease power consumption) to each respective device included in the aggregation determined in act 226. As discussed above, the controller may send a signal to turn off or on, or may send a signal to increase or decrease power consumption by adjusting voltage supplied to devices equipped with a variable speed drive.

The energy load balancing process 200 may include one or more iterations through steps 220-228, depending on whether the measured system value is substantially equal to the threshold value. According to certain embodiments, the threshold value may include a range of values. For example, the threshold frequency may be 60 ±0.01 Hz.

Referring back to FIG. 1, according to a further aspect, the load balance controller 108 may be used even when there is no energy generation contribution from either of the renewable energy sources 104a and 104b. In certain instances the power generators 102a and 102b may generate too much, or too little energy for the consumers 1 10a-110d, and as discussed above, the load balance controller 108 may respond accordingly. For example, instead of engaging the use of one or more peak power plants, the load balance controller 108 may signal to an aggregated set of load balancing devices to power down or otherwise decrease energy consumption. According to this example, the use of one or more peak power plants may therefore be reduced or eliminated.

In certain embodiments, the load balance controller may be configured to "learn," i.e., through machine learning techniques, or otherwise better understand the response characteristics for each load balancing device over time. For example, when a new device is added to the system, the owner and/or user of each respective device may initially enter information regarding the available addable or sheddable load. In certain instances, these values may correspond to a nameplate rating provided by the manufacturer. The initial information may also be provided from a measurement taken from the device itself. Over time, the load balance controller may use one or more statistical modeling techniques to better predict how much (or little) the load balancing device will impact part or all of the system. For example, the load balance controller may be able to determine, given one or more of the device's current operating constraints, how long the device may participate in a load balancing event before one or more of the operating constraints are violated. Non-limiting examples of statistical approaches that may be used include linear or polynomial regression, decision trees, and random forest regressions. In addition, the system may use these techniques to forecast which devices may participate in a load balancing event and which may not. For example, when an HVAC unit is first added to the system, the initial data obtained regarding its power consumption /reduction capacity may be overstated or understated. Over time, the load balance controller learns the response characteristics of the unit and uses this information to more accurately determine the actual power consumption/reduction capacity when considering the device in a load balancing event. According to another example, the load balance controller may learn the various interactions of the load balancing devices with one other and use this information in a load balancing event.

In accordance with some embodiments, the load balancing system is configured to scale upward and downward in response to the energy balancing needs of the entire system or part of the system. For instance, the system may scale to provide demand-side load balancing at not only the entire grid level, but also at the town or neighborhood level. For example, if the power grid in a first neighborhood is affected, i.e., damaged, by a storm, the system may exclude the affected neighborhood from the load balancing mechanism and instead focus on the rest of the system that was not affected by the storm. According to another example, if a substantial amount of renewable energy is directly connected to one portion of the distribution network 116, e.g., a single neighborhood with solar panels on the roofs, the system may analyze the energy readings from this portion of the distribution network, and then use local load balancing devices attached to that portion to balance the load before addressing other portions of the grid.

According to some embodiments, the load balancing devices form an interconnected network or community in which the owners and/or users of each respective device may choose to partake in the load balancing system described above. For instance, a commercial property may slow down an escalator or turn on the lobby lights during the day, or a residence may disable the water heater for a short period of time or turn on the refrigerator, in an effort to balance the load. Further, the user may opt to remove or otherwise disconnect the device from the program for a period of time. For example, if a user usually allows the device to participate in the program during the workday (because the user is not home), then on a workday that the user is home, the device can be removed from the "network." According to another example, the device may be malfunctioning or otherwise unavailable to participate in the program. In accordance with an additional aspect, an automated enrollment system may be provided through a web interface, where users can add (or remove) devices to the system. For instance, the user may be able to navigate a web page that interfaces with the load balance controller or is otherwise dedicated to balancing the energy load of the system using the demand-side approach discussed above. The user may be able to provide one or more connection details for the device, which in some instances may be provided by the manufacturer of the device in the form of a Quick Response (QR) or other type of code that is located on the device itself. Once connected, the load balance controller may then query the device to obtain one or more of the operational constraints and use this information to include the device in a load balancing event.

According to a further embodiment, one or more of the load balancing devices are configured to participate in the load balancing mechanism by performing one or more of the acts described above in reference to the monitoring system and the load balance controller. For example, the load balancing device may be configured to monitor one or more parameters of the system, such as the frequency of the power grid, and/or the operating constraints of other load balancing devices included in the aforementioned "network." Based on this information and the load balancing device's own operating constraints, the load balancing device may be configured to report a current status, such as on/off, to the load balance controller. In certain instances, this information may also include how long the device may change state (e.g., remain on or off) without impacting its own operating constraints. This approach may serve to transfer a portion of the computational load from the load balance controller to one or more of the load balancing devices. In certain instances, this reduction allows the load balancing system to scale upward and include more load balancing devices, since the reduction in computational load allows the load balance controller to focus on higher levels of load management.

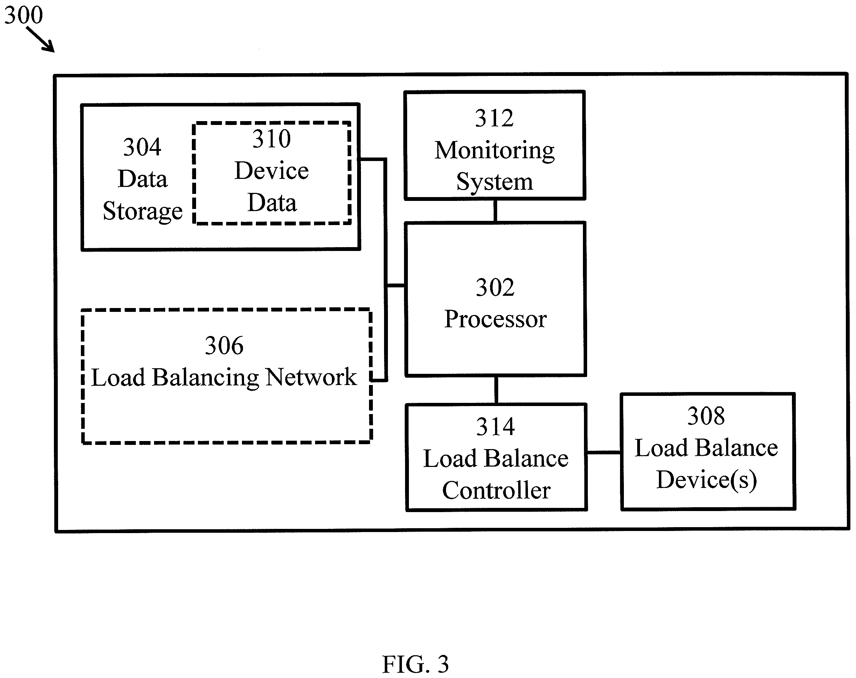

FIG. 3 illustrates a load balancing control system 300 that is configured to balance supply with demand within an electrical power generation and distribution system. As shown in FIG. 3, the load balancing control system 300 comprises a processor 302 coupled to data storage 304, load balancing network 306, load balance controller 314, and monitoring system 312. The data storage 304 may optionally store device data 310. The load balance controller 314 is coupled to one or more load balance devices 308.

According to the embodiment illustrated in FIG. 3, the processor 302 performs a series of instructions that result in manipulated data that is stored and retrieved from the data storage 304. According to a variety of examples, the processor 302 is a commercially available processor, such as a processor manufactured by Texas Instruments, Intel, AMD, Sun, IBM, Motorola, and ARM Holdings, for example. It is appreciated that the processor 302 may be any type of processor, multiprocessor or controller, whether commercially available or specially manufactured.

In addition, in several embodiments the processor 302 is configured to execute a conventional real time operating system (RTOS), such as RTLinux. In these examples, the RTOS may provide platform services to application software, such as some software associated with the load balance controller 314 discussed above. These platform services may include inter-process and network communication, file system management, and standard data store manipulation. One or more operating systems may be used, and examples are not limited to any particular operating system or operating system characteristic. For instance, in some examples, the processor 302 may be configured to execute a non-real time operating system, such as BSD or GNU/Linux. It is also appreciated that the processor 302 may execute an Operating System Abstraction Library (OSAL).

The load balance controller 314 may be implemented using hardware, software, or a combination of hardware and software. For instance, in one example, the load balance controller 314 is implemented as a software component that is stored within the data storage 304 and executed by the processor 302. In this example, the instructions included in the load balance controller 314 program the processor 302 to generate control signals for one or more load balance devices 308 coupled to the load balance controller 314. As discussed above, the instructions included in the load balance controller 314 may be based on a dynamic demand-side load balancing control strategy. In other examples, the load balance controller 314 may be an application-specific integrated circuit (ASIC) that is coupled to the processor 302. Thus, examples of the load balance controller 314 are not limited to a particular hardware or software implementation. The load balancing control system 300 may execute one or more processes to balance the energy load within the electrical power generation and distribution system. One example of a process performed by the load balance controller 314 was discussed above with reference to FIG. 2.

According to some embodiments, one or more of the components disclosed herein, such as the load balance controller 314 and the monitoring system 312, may read parameters that affect the functions they perform. These parameters may be physically stored in any form of suitable memory including volatile memory, such as RAM, or nonvolatile memory, such as a flash memory or magnetic hard drive. In addition, the parameters may be logically stored in a proprietary data structure, such as a database or file defined by a user mode application, or in a commonly shared data structure, such as an application registry that is defined by an operating system.

The data storage 304 includes a computer readable and writeable nonvolatile data storage medium configured to store non-transitory instructions and data. In addition, the data storage 304 includes processor memory that stores data during operation of the processor 302. In some examples, the processor memory includes a relatively high performance, volatile, random access memory such as dynamic random access memory (DRAM), static memory (SRAM) or synchronous DRAM. However, the processor memory may include any device for storing data, such as a non-volatile memory, with sufficient throughput and storage capacity to support the functions described herein. According to several examples, the processor 302 causes data to be read from the nonvolatile data storage medium into the processor memory prior to processing the data. In these examples, the processor 302 copies the data from the processor memory to the non-volatile storage medium after processing is complete. A variety of components may manage data movement between the non-volatile storage medium and the processor memory and examples are not limited to particular data management components. Further, examples are not limited to a particular memory, memory system, or data storage system.

The instructions stored on the data storage 304 may include executable programs or other code that can be executed by the processor 302. The instructions may be persistently stored as encoded signals, and the instructions may cause the processor 302 to perform the functions described herein. The data storage 304 also may include information that is recorded, on or in, the medium, and this information may be processed by the processor 302 during execution of instructions. For example, the medium may be optical disk, magnetic disk, or flash memory, among others, and may be permanently affixed to, or removable from, the load balancing control system 300.

In some embodiments, the device data 310 includes data used by the load balance controller 314 to improve the demand-side load balancing control strategy. More particularly, the device data 310 may include one or more operating constraints related to the load balancing devices 308, as previously discussed. The device data 310 may be stored in any logical construction capable of storing information on a computer readable medium including, among other structures, flat files, indexed files, hierarchical databases, relational databases or object oriented databases. These data structures may be specifically configured to conserve storage space or increase data exchange performance. In addition, various examples organize the device data 310 into particularized and, in some cases, unique structures to perform the functions disclosed herein. In these examples, the data structures are sized and arranged to store values for particular types of data, such as integers, floating point numbers, character strings, arrays, linked lists, and the like. It is appreciated that the load balance controller 314 and the device data 310 may be combined into a single component or re-organized so that a portion of the device data 310 is included in load balance controller 314. Such variations in these and the other components illustrated in FIG. 3 are intended to be within the scope of the embodiments disclosed herein.

As shown in FIG. 3, the load balancing control system 300 also includes load balancing network 306, which as discussed above, may include one or more specialized devices or may be configured to exchange (i.e., send or receive) data with one or more components of the load balancing control system 300 or elsewhere. The load balancing network therefore physically and logically couples one or more components of the load balancing control system 300 with each other for the purposes of powering or controlling the operation of the components. For example, the load balancing network 306 may be coupled to a communication device that is powered and/or controlled by the processor 302.

According to various examples, hardware and software components of the load balancing network 306 and the monitoring system 312 implement a variety of coupling and communication techniques. In some examples, these components use leads, cables or other wired connectors as conduits to exchange data. In other examples, wireless technologies such as radio frequency or infrared technology are used. Software components that may be included in these devices enable the processor 302 to communicate with other components of the load balancing control system 300. The software components may include elements such as objects, executable code, and populated data structures. According to at least some examples, where one or more components of the load balancing control system 300 communicate using analog signals, the load balancing network 306, and monitoring system 312 further include components configured to convert analog information into digital information, and vice-versa, to enable the processor 302 to communicate with one or more components of the load balancing control system 300.

In some embodiments, the components of the load balancing network 306 couple the processor 302 to one or more communication devices. To ensure data transfer is secure, in some examples, the load balancing control system 300 can transmit secure data via the load balancing network 306 using a variety of security measures. In other examples, the load balancing network 306 includes both a physical interface configured for wireless communication and a physical interface configured for wired communication. In some examples, the load balancing control system 300 is configured to exchange operating parameters or other types of information with an external system via one or more communication devices coupled to the load balancing network 306.

Aspects of this disclosure provide one or more advantages over other energy load balancing systems. For example, many small loads may be aggregated together into a responsive, demand-side mechanism that can be used to augment existing supply-side load balancing techniques. The system is capable of responding to load balance events in real time. In certain instances, this capability may reduce the use of one or more peaking stations, which are expensive to operate, and may further prevent brown-outs while the power grid waits for a peaking station to come online. According to one example, a spike in power generated by renewable energy can be detected in real time and responded to in real time by increasing energy demand through the use of the load balancing devices. Further, the system is configured to analyze the metadata surrounding each load balancing device through the use of machine learning techniques, including statistical modeling techniques, to further improve and refine the process. For example, over time the load balance controller may learn or further refine the response characteristics, including operating constraints, of a load balancing device and use this information when considering the device for a load balancing event. In addition, users of one or more load balancing devices may participate in the system. For example, users may enroll a load balancing device and supply identification and other information, including one or more operating constraints. The device may then be considered for use in a load balancing event by the load balance controller.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope defined in the claims.

## Claims

1. A system comprising:
a load balance controller (108) in communication with at least one energy generation source (102a, 102b, 104a, 104b);
at least one energy consumer (110a-110d);
a plurality of load balancing devices (112a-112g), each load balancing device of the plurality of load balancing devices being configured to compensate for variations in frequency of power supplied from an electrical power grid (114); and
a monitoring system (106) configured to operate in real time and generate a signal regarding information related to one or more operational parameters of an electrical power grid (114 and 116), the one or more operational parameters including a frequency of power supplied by the electrical grid to the plurality of load balancing devices, each load balancing device of the plurality of load balancing devices being configured to receive the power supplied by the electrical grid and be at least partially controlled by the load balance controller over a network (122). the load balance controller configured to:
receive, from the monitoring system (106), the signal including a value of the frequency of power supplied by the electrical grid to the plurality of load balancing devices corresponding to a load balance state of the electrical power grid (220);
identify a threshold value for the frequency value, the threshold value corresponding to a load balance state where an amount of electrical power generated by the at least one energy generation source is substantially equivalent to an amount of electrical power consumed by the at least one energy consumer (222);
determine a deviation between the frequency value and the threshold value (222);
receive operating constraints associated with each load balancing device of the plurality of load balancing devices, the operating constraints including current status, power consumption capacity, time period of availability, and one or more conditions related to availability (224);
identify at least one load balancing device of the plurality of load balancing devices having at least one operating constraint of the received operating constraints that correlates with the deviation,
wherein identifying includes aggregating in real time one or more identified load balancing devices of the plurality of load balancing devices such that a sum total of values corresponding to power consumption capacity of each respective load balancing device included in the aggregation is substantially equal to the deviation (226); and
selectively control the power consumption of the identified at least one load balancing device (228) to minimize the deviation by controlling the identified at least one load balancing device to either increase or decrease power consumption.

2. The load balance controller of claim 1, wherein any one or more of the following applies:
(a) the load balance controller is further configured to use one or more statistical modeling techniques to determine at least one operating constraint associated with at least one load balancing device; and
(b) the load balance controller is further configured to receive a signal based on at least one operating constraint of at least one load balancing device, and further configured to reduce at least a portion of a computational load of the load balance controller based on the signal.

3. The load balance controller of claim 1, wherein the load balance controller is further configured to:
determine that the value of the at least one operational parameter corresponds to a load balance state where an amount of electrical power generated by the at least one energy generation source exceeds an amount of electrical power consumed by the at least one energy consumer;
generate a control signal for each respective load balancing device of the aggregated load balancing devices that causes each load balancing device to increase power consumption; and
transmit the control signal to each respective load balancing device.

4. The load balance controller of claim 1, wherein the load balance controller is further configured to:
determine that the value of the at least one operational parameter corresponds to a load balance state where an amount of electrical power generated by the at least one energy generation source is below an amount of electrical power consumed by the at least one energy consumer;
generate a control signal for each respective load balancing device of the aggregated load balancing devices that causes each load balancing device to reduce power consumption; and
transmit the control signal to each respective load balancing device.

5. The load balance controller of claim 4, wherein the load balance controller generates the control signal for at least one load balancing device of the aggregated load balancing devices to cause the at least one load balancing device to reduce power consumption without shutting off.

6. The load balance controller of claim 1, wherein any one or more of the following applies:
(a) the at least one operational parameter is a frequency of the electrical power grid; and
(b) the at least one energy generation source comprises at least one renewable energy source and an amount of electrical power generated by the at least one renewable energy source corresponds with the value of the at least one operational parameter.

7. A method for load balancing an electrical power distribution system (100), the electrical power distribution system including at least one energy generation source (102a, 102b, 104a, 104b), at least one energy consumer (110a-110d), a plurality of load balancing devices (112a-112g), each load balancing device of the plurality of load balancing devices being configured to compensate for variations in frequency of power supplied from an electrical power grid (114), a monitoring system (106) configured to operate in real time and generate a signal regarding information related to one or more operational parameters of an electrical power grid (114 and 116), the one or more operational parameters including a frequency of power supplied by the electrical grid to the plurality of load balancing devices, each load balancing device of the plurality of load balancing devices being configured to receive the power supplied by the electrical grid and be at least partially controlled by the load balance controller over a network (122), the method comprising:
receiving, from the monitoring system, the signal including a value of the frequency of power supplied by the electrical grid to the plurality of load balancing devices corresponding to a load balance state of the electrical power grid (220);
identifying a threshold value for the frequency value, the threshold value corresponding to a load balance state where an amount of electrical power generated by the at least one energy generation source is substantially equivalent to an amount of electrical power consumed by the at least one energy consumer (222);
determining a deviation between the frequency value and the threshold value (222);
receiving operating constraints associated with each load balancing device of the plurality of load balancing devices, the operating constraints including current status, power consumption capacity, time period of availability, and one or more conditions related to availability (224);
identifying at least one load balancing device of the plurality of load balancing devices having at least one operating constraint of the received operating constraints that correlates with the deviation,
wherein identifying includes aggregating in real time one or more identified load balancing devices of the plurality of load balancing devices such that a sum total of values corresponding to power consumption capacity of each respective load balancing device included in the aggregation is substantially equal to the deviation (226); and
selectively controlling the power consumption of the identified at least one load balancing device (228) to minimize the deviation by controlling the identified at least one load balancing device to either increase or decrease power consumption.

8. The method of claim 7, further comprising any one or more of the following:
(a) using one or more statistical modeling techniques to determine at least one operating constraint associated with at least one load balancing device; and
(b) transferring at least a portion of a computational load associated with receiving the at least one operating constraint to at least one load balancing device.

9. The method of claim 7, further comprising:
determining that the value of the at least one operational parameter corresponds to a load balance state where an amount of electrical power generated by the at least one energy generation source exceeds an amount of electrical power consumed by the at least one energy consumer;
generating a control signal for each respective load balancing device of the aggregated load balancing devices such that the control signal causes each load balancing device to increase power consumption; and
transmitting the control signal to each respective load balancing device.

10. The method of claim 7, further comprising:
determining that the value of the at least one operational parameter corresponds to a load balance state where an amount of electrical power generated by the at least one energy generation source is below an amount of electrical power consumed by the at least one energy consumer;
generating a control signal for each respective load balancing device of the aggregated load balancing devices such that the control signal causes each load balancing device to reduce power consumption; and
transmitting the control signal to each respective load balancing device.

## Patentansprüche

1. Ein System, das Folgendes beinhaltet:
eine Lastausgleichssteuerung (108) in Kommunikation mit mindestens einer Energieerzeugungsquelle (102a, 102b, 104a, 104b);
mindestens einen Energieverbraucher (110a-110d);
eine Vielzahl von lastausgleichenden Vorrichtungen (112a-112g), wobei jede lastausgleichende Vorrichtung der Vielzahl von lastausgleichenden Vorrichtungen konfiguriert ist, um Variationen der Frequenz eines von einem elektrischen Stromversorgungsnetz (114) gelieferten Stroms zu kompensieren; und
ein Überwachungssystem (106), das konfiguriert ist, um in Echtzeit zu arbeiten und ein Signal bezüglich Informationen zu erzeugen, die einen oder mehrere Betriebsparameter eines elektrischen Stromversorgungsnetzes (114 und 116) betreffen, wobei der eine oder die mehreren Betriebsparameter eine Frequenz des Stroms, der der Vielzahl von lastausgleichenden Vorrichtungen von dem elektrischen Versorgungsnetz geliefert wird, umfassen, wobei jede lastausgleichende Vorrichtung der Vielzahl von lastausgleichenden Vorrichtungen konfiguriert ist, um den von dem elektrischen Versorgungsnetz gelieferten Strom zu empfangen und um mindestens teilweise über ein Netzwerk (122) von der Lastausgleichssteuerung gesteuert zu werden, wobei die Lastausgleichssteuerung für Folgendes konfiguriert ist:
Empfangen, von dem Überwachungssystem (106), des Signals, das einen Wert der Frequenz des Stroms, der der Vielzahl von lastausgleichenden Vorrichtungen von dem elektrischen Versorgungsnetz geliefert wird, umfasst, welcher einem Lastausgleichsstatus des elektrischen Stromversorgungsnetzes entspricht (220);
Identifizieren eines Schwellenwerts für den Frequenzwert, wobei der Schwellenwert einem Lastausgleichsstatus entspricht, bei dem ein Betrag des von der mindestens einen Energieerzeugungsquelle erzeugten elektrischen Stroms einem Betrag des von dem mindestens einen Energieverbraucher verbrauchten elektrischen Stroms im Wesentlichen gleichwertig ist (222);
Bestimmen einer Abweichung zwischen dem Frequenzwert und dem Schwellenwert (222);
Empfangen von Betriebseinschränkungen, die mit jeder lastausgleichenden Vorrichtung der Vielzahl von lastausgleichenden Vorrichtungen assoziiert sind, wobei die Betriebseinschränkungen den aktuellen Status, die Stromverbrauchskapazität, die Zeitdauer der Verfügbarkeit und eine oder mehrere Bedingungen, die mit der Verfügbarkeit in Zusammenhang stehen, umfassen (224);
Identifizieren mindestens einer lastausgleichenden Vorrichtung der Vielzahl von lastausgleichenden Vorrichtungen, die mindestens eine Betriebseinschränkung der empfangenen Betriebseinschränkungen aufweist, die mit der Abweichung übereinstimmt,
wobei das Identifizieren das Aggregieren einer oder mehrerer identifizierter lastausgleichender Vorrichtungen der Vielzahl von lastausgleichenden Vorrichtungen in Echtzeit umfasst, sodass eine Gesamtsumme der Werte, die der Stromverbrauchskapazität jeder in der Aggregation umfassten jeweiligen lastausgleichenden Vorrichtung entspricht, im Wesentlichen gleich der Abweichung ist (226); und
selektives Steuern des Stromverbrauchs der identifizierten mindestens einen lastausgleichenden Vorrichtung (228), um die Abweichung durch das Steuern der identifizierten mindestens einen lastausgleichenden Vorrichtung, sodass sie den Stromverbrauch entweder erhöht oder verringert, zu minimieren.

2. Lastausgleichssteuerung gemäß Anspruch 1, wobei eines oder mehrere der Folgenden zutreffen:
(a) die Lastausgleichssteuerung ist ferner konfiguriert, um eine oder mehrere statistische Modellierungstechniken zu verwenden, um mindestens eine Betriebseinschränkung, die mit mindestens einer lastausgleichenden Vorrichtung assoziiert ist, zu bestimmen; und
(b) die Lastausgleichssteuerung ist ferner konfiguriert, um ein Signal auf der Basis mindestens einer Betriebseinschränkung mindestens einer lastausgleichenden Vorrichtung zu empfangen, und ferner konfiguriert, um mindestens einen Teil einer Rechenlast der Lastausgleichssteuerung auf der Basis des Signals zu reduzieren.

3. Lastausgleichssteuerung gemäß Anspruch 1, wobei die Lastausgleichssteuerung ferner für Folgendes konfiguriert ist:
Bestimmen, dass der Wert des mindestens einen Betriebsparameters einem Lastausgleichsstatus entspricht, bei dem ein Betrag des von der mindestens einen Energieerzeugungsquelle erzeugten elektrischen Stroms einen Betrag des von dem mindestens einen Energieverbraucher verbrauchten elektrischen Stroms übertrifft;
Erzeugen eines Steuersignals für jede jeweilige lastausgleichende Vorrichtung der aggregierten lastausgleichenden Vorrichtungen, das bewirkt, dass jede lastausgleichende Vorrichtung den Stromverbrauch erhöht; und
Übertragen des Steuersignals an jede jeweilige lastausgleichende Vorrichtung.

4. Lastausgleichssteuerung gemäß Anspruch 1, wobei die Lastausgleichssteuerung ferner für Folgendes konfiguriert ist:
Bestimmen, dass der Wert des mindestens einen Betriebsparameters einem Lastausgleichsstatus entspricht, bei dem ein Betrag des von der mindestens einen Energieerzeugungsquelle erzeugten elektrischen Stroms unter einem Betrag des von dem mindestens einen Energieverbraucher verbrauchten elektrischen Stroms liegt;
Erzeugen eines Steuersignals für jede jeweilige lastausgleichende Vorrichtung der aggregierten lastausgleichenden Vorrichtungen, das bewirkt, dass jede lastausgleichende Vorrichtung den Stromverbrauch reduziert; und
Übertragen des Steuersignals an jede jeweilige lastausgleichende Vorrichtung.

5. Lastausgleichssteuerung gemäß Anspruch 4, wobei die Lastausgleichssteuerung das Steuersignal für mindestens eine lastausgleichende Vorrichtung der aggregierten lastausgleichenden Vorrichtungen erzeugt, um zu bewirken, dass die mindestens eine lastausgleichende Vorrichtung den Stromverbrauch reduziert, ohne sich abzuschalten.

6. Lastausgleichssteuerung gemäß Anspruch 1, wobei eines oder mehrere der Folgenden zutreffen:
(a) der mindestens eine Betriebsparameter ist eine Frequenz des elektrischen Stromversorgungsnetzes; und
(b) die mindestens eine Energieerzeugungsquelle beinhaltet mindestens eine erneuerbare Energiequelle, und ein Betrag des von der mindestens einen erneuerbaren Energiequelle erzeugten elektrischen Stroms entspricht dem Wert des mindestens einen Betriebsparameters.

7. Ein Verfahren zum Lastausgleichen eines elektrischen Stromverteilsystems (100), wobei das elektrische Stromverteilsystem Folgendes umfasst: mindestens eine Energieerzeugungsquelle (102a, 102b, 104a, 104b), mindestens einen Energieverbraucher (110a-110d), eine Vielzahl von lastausgleichenden Vorrichtungen (112a-112g), wobei jede lastausgleichende Vorrichtung der Vielzahl von lastausgleichenden Vorrichtungen konfiguriert ist, um Variationen der Frequenz eines von einem elektrischen Stromversorgungsnetz (114) gelieferten Stroms zu kompensieren, ein Überwachungssystem (106), das konfiguriert ist, um in Echtzeit zu arbeiten und ein Signal bezüglich Informationen zu erzeugen, die einen oder mehrere Betriebsparameter eines elektrischen Stromversorgungsnetzes (114 und 116) betreffen, wobei der eine oder die mehreren Betriebsparameter eine Frequenz des Stroms, der der Vielzahl von lastausgleichenden Vorrichtungen von dem elektrischen Versorgungsnetz geliefert wird, umfassen, wobei jede lastausgleichende Vorrichtung der Vielzahl von lastausgleichenden Vorrichtungen konfiguriert ist, um den von dem elektrischen Versorgungsnetz gelieferten Strom zu empfangen und um mindestens teilweise über ein Netzwerk (122) von der Lastausgleichssteuerung gesteuert zu werden, wobei das Verfahren Folgendes beinhaltet:
Empfangen, von dem Überwachungssystem, des Signals, das einen Wert der Frequenz des Stroms, der der Vielzahl von lastausgleichenden Vorrichtungen von dem elektrischen Versorgungsnetz geliefert wird, umfasst, weicher einem Lastausgleichsstatus des elektrischen Stromversorgungsnetzes entspricht (220);
Identifizieren eines Schwellenwerts für den Frequenzwert, wobei der Schwellenwert einem Lastausgleichsstatus entspricht, bei dem ein Betrag des von der mindestens einen Energieerzeugungsquelle erzeugten elektrischen Stroms einem Betrag des von dem mindestens einen Energieverbraucher verbrauchten elektrischen Stroms im Wesentlichen gleichwertig ist (222);
Bestimmen einer Abweichung zwischen dem Frequenzwert und dem Schwellenwert (222);
Empfangen von Betriebseinschränkungen, die mit jeder lastausgleichenden Vorrichtung der Vielzahl von lastausgleichenden Vorrichtungen assoziiert sind, wobei die Betriebseinschränkungen den aktuellen Status, die Stromverbrauchskapazität, die Zeitdauer der Verfügbarkeit und eine oder mehrere Bedingungen, die mit der Verfügbarkeit in Zusammenhang stehen, umfassen (224);
Identifizieren mindestens einer lastausgleichenden Vorrichtung der Vielzahl von lastausgleichenden Vorrichtungen, die mindestens eine Betriebseinschränkung der empfangenen Betriebseinschränkungen aufweist, die mit der Abweichung übereinstimmt,
wobei das Identifizieren das Aggregieren einer oder mehrerer identifizierter lastausgleichender Vorrichtungen der Vielzahl von lastausgleichenden Vorrichtungen in Echtzeit umfasst, sodass eine Gesamtsumme der Werte, die der Stromverbrauchskapazität jeder in der Aggregation umfassten jeweiligen lastausgleichenden Vorrichtung entspricht, im Wesentlichen gleich der Abweichung ist (226); und
selektives Steuern des Stromverbrauchs der identifizierten mindestens einen lastausgleichenden Vorrichtung (228), um die Abweichung durch das Steuern der identifizierten mindestens einen lastausgleichenden Vorrichtung, sodass sie den Stromverbrauch entweder erhöht oder verringert, zu minimieren.

8. Verfahren gemäß Anspruch 7, das ferner eines oder mehrere der Folgenden beinhaltet:
(a) Verwenden einer oder mehrerer statistischer Modellierungstechniken, um mindestens eine Betriebseinschränkung, die mit mindestens einer lastausgleichenden Vorrichtung assoziiert ist, zu bestimmen; und
(b) Transferieren mindestens eines Teils einer mit dem Empfangen der mindestens einen Betriebseinschränkung assoziierten Rechenlast auf mindestens eine lastausgleichende Vorrichtung.

9. Verfahren gemäß Anspruch 7, das ferner Folgendes beinhaltet:
Bestimmen, dass der Wert des mindestens einen Betriebsparameters einem Lastausgleichsstatus entspricht, bei dem ein Betrag des von der mindestens einen Energieerzeugungsquelle erzeugten elektrischen Stroms einen Betrag des von dem mindestens einen Energieverbraucher verbrauchten elektrischen Stroms übertrifft;
Erzeugen eines Steuersignals für jede jeweilige lastausgleichende Vorrichtung der aggregierten lastausgleichenden Vorrichtungen, sodass das Steuersignal bewirkt, dass jede lastausgleichende Vorrichtung den Stromverbrauch erhöht; und
Übertragen des Steuersignals an jede jeweilige lastausgleichende Vorrichtung.

10. Verfahren gemäß Anspruch 7, das ferner Folgendes beinhaltet:
Bestimmen, dass der Wert des mindestens einen Betriebsparameters einem Lastausgleichsstatus entspricht, bei dem ein Betrag des von der mindestens einen Energieerzeugungsquelle erzeugten elektrischen Stroms unter einem Betrag des von dem mindestens einen Energieverbraucher verbrauchten elektrischen Stroms liegt;
Erzeugen eines Steuersignals für jede jeweilige lastausgleichende Vorrichtung der aggregierten lastausgleichenden Vorrichtungen, sodass das Steuersignal bewirkt, dass jede lastausgleichende Vorrichtung den Stromverbrauch reduziert; und Übertragen des Steuersignals an jede jeweilige lastausgleichende Vorrichtung.

## Revendications

1. Un système comprenant :
un appareil de commande d'équilibre de charge (108) en communication avec au moins une source de génération d'énergie (102a, 102b, 104a, 104b) ;
au moins un consommateur d'énergie (110a-110d) ;
une pluralité de dispositifs d'équilibrage de charge (112a-112g), chaque dispositif d'équilibrage de charge de la pluralité de dispositifs d'équilibrage de charge étant configuré pour compenser des variations de fréquence de puissance apportée depuis un réseau de puissance électrique (114) ; et
un système de surveillance (106) configuré pour fonctionner en temps réel et générer un signal concernant des informations ayant trait à un ou plusieurs paramètres de fonctionnement d'un réseau de puissance électrique (114 et 116), les un ou plusieurs paramètres de fonctionnement incluant une fréquence de puissance apportée par le réseau électrique à la pluralité de dispositifs d'équilibrage de charge, chaque dispositif d'équilibrage de charge de la pluralité de dispositifs d'équilibrage de charge étant configuré pour recevoir la puissance apportée par le réseau électrique et être au moins partiellement commandé par l'appareil de commande d'équilibre de charge sur un réseau (122), l'appareil de commande d'équilibre de charge étant configuré pour :
recevoir, en provenance du système de surveillance (106), le signal incluant une valeur de la fréquence de puissance apportée par le réseau électrique à la pluralité de dispositifs d'équilibrage de charge correspondant à une situation d'équilibre de charge du réseau de puissance électrique (220) ;
identifier une valeur de seuil pour la valeur de fréquence, la valeur de seuil correspondant à une situation d'équilibre de charge où une quantité de puissance électrique générée par l'au moins une source de génération d'énergie est substantiellement équivalente à une quantité de puissance électrique consommée par l'au moins un consommateur d'énergie (222) ;
déterminer un écart entre la valeur de fréquence et la valeur de seuil (222) ;
recevoir des contraintes de fonctionnement associées à chaque dispositif d'équilibrage de charge de la pluralité de dispositifs d'équilibrage de charge, les contraintes de fonctionnement incluant un état actuel, une capacité de consommation de puissance,
une période de temps de disponibilité, et une ou plusieurs conditions ayant trait à la disponibilité (224) ;
identifier au moins un dispositif d'équilibrage de charge de la pluralité de dispositifs d'équilibrage de charge ayant au moins une contrainte de fonctionnement des contraintes de fonctionnement reçues qui corrèle avec l'écart,
dans lequel l'identification inclut l'agrégation en temps réel d'un ou de plusieurs dispositifs d'équilibrage de charge identifiés de la pluralité de dispositifs d'équilibrage de charge de telle sorte qu'une somme totale de valeurs correspondant à une capacité de consommation de puissance de chaque dispositif d'équilibrage de charge respectif inclus dans l'agrégation soit substantiellement égale à l'écart (226) ; et
commander sélectivement la consommation de puissance de l'au moins un dispositif d'équilibrage de charge identifié (228) afin de minimiser l'écart en commandant l'au moins un dispositif d'équilibrage de charge identifié soit pour augmenter, soit pour diminuer la consommation de puissance.

2. L'appareil de commande d'équilibre de charge de la revendication 1, dans lequel l'un quelconque ou plusieurs des points suivants s'appliquent :
(a) l'appareil de commande d'équilibre de charge est en outre configuré pour utiliser une ou plusieurs techniques de modélisation statistique afin de déterminer au moins une contrainte de fonctionnement associée à au moins un dispositif d'équilibrage de charge ; et
(b) l'appareil de commande d'équilibre de charge est en outre configuré pour recevoir un signal sur la base d'au moins une contrainte de fonctionnement d'au moins un dispositif d'équilibrage de charge, et est en outre configuré pour réduire au moins une portion d'une charge de calcul de l'appareil de commande d'équilibre de charge sur la base du signal.

3. L'appareil de commande d'équilibre de charge de la revendication 1, l'appareil de commande d'équilibre de charge étant en outre configuré pour :
déterminer que la valeur de l'au moins un paramètre de fonctionnement correspond à une situation d'équilibre de charge où une quantité de puissance électrique générée par l'au moins une source de génération d'énergie dépasse une quantité de puissance électrique consommée par l'au moins un consommateur d'énergie ;
générer un signal de commande pour chaque dispositif d'équilibrage de charge respectif parmi les dispositifs d'équilibrage de charge agrégés, lequel amène chaque dispositif d'équilibrage de charge à augmenter la consommation de puissance ; et
transmettre le signal de commande à chaque dispositif d'équilibrage de charge respectif.

4. L'appareil de commande d'équilibre de charge de la revendication 1, l'appareil de commande d'équilibre de charge étant en outre configuré pour :
déterminer que la valeur de l'au moins un paramètre de fonctionnement correspond à une situation d'équilibre de charge où une quantité de puissance électrique générée par l'au moins une source de génération d'énergie est en dessous d'une quantité de puissance électrique consommée par l'au moins un consommateur d'énergie ;
générer un signal de commande pour chaque dispositif d'équilibrage de charge respectif parmi les dispositifs d'équilibrage de charge agrégés, lequel amène chaque dispositif d'équilibrage de charge à réduire la consommation de puissance ; et
transmettre le signal de commande à chaque dispositif d'équilibrage de charge respectif.

5. L'appareil de commande d'équilibre de charge de la revendication 4, l'appareil de commande d'équilibre de charge générant le signal de commande pour au moins un dispositif d'équilibrage de charge parmi les dispositifs d'équilibrage de charge agrégés afin d'amener l'au moins un dispositif d'équilibrage de charge à réduire la consommation d'énergie sans s'éteindre.

6. L'appareil de commande d'équilibre de charge de la revendication 1, dans lequel l'un quelconque ou plusieurs des points suivants s'appliquent :
(a) l'au moins un paramètre de fonctionnement est une fréquence du réseau de puissance électrique ; et
(b) l'au moins une source de génération d'énergie comprend au moins une source d'énergie renouvelable et une quantité de puissance électrique générée par l'au moins une source d'énergie renouvelable correspond à la valeur de l'au moins un paramètre de fonctionnement.

7. Un procédé pour l'équilibrage de charge d'un système de distribution de puissance électrique (100), le système de distribution de puissance électrique incluant au moins une source de génération d'énergie (102a, 102b, 104a, 104b), au moins un consommateur d'énergie (110a-110d), une pluralité de dispositifs d'équilibrage de charge (112a-112g), chaque dispositif d'équilibrage de charge de la pluralité de dispositifs d'équilibrage de charge étant configuré pour compenser des variations de fréquence de puissance apportée depuis un réseau de puissance électrique (114), un système de surveillance (106) configuré pour fonctionner en temps réel et générer un signal concernant des informations ayant trait à un ou plusieurs paramètres de fonctionnement d'un réseau de puissance électrique (114 et 116), les un ou plusieurs paramètres de fonctionnement incluant une fréquence de puissance apportée par le réseau électrique à la pluralité de dispositifs d'équilibrage de charge, chaque dispositif d'équilibrage de charge de la pluralité de dispositifs d'équilibrage de charge étant configuré pour recevoir la puissance apportée par le réseau électrique et être au moins partiellement commandé par l'appareil de commande d'équilibre de charge sur un réseau (122), le procédé comprenant :
la réception, en provenance du système de surveillance, du signal incluant une valeur de la fréquence de puissance apportée par le réseau électrique à la pluralité de dispositifs d'équilibrage de charge correspondant à une situation d'équilibre de charge du réseau de puissance électrique (220) ;
l'identification d'une valeur de seuil pour la valeur de fréquence, la valeur de seuil correspondant à une situation d'équilibre de charge où une quantité de puissance électrique générée par l'au moins une source de génération d'énergie est substantiellement équivalente à une quantité de puissance électrique consommée par l'au moins un consommateur d'énergie (222) ;
la détermination d'un écart entre la valeur de fréquence et la valeur de seuil (222) ;
la réception de contraintes de fonctionnement associées à chaque dispositif d'équilibrage de charge de la pluralité de dispositifs d'équilibrage de charge, les contraintes de fonctionnement incluant un état actuel, une capacité de consommation de puissance, une période de temps de disponibilité, et une ou plusieurs conditions ayant trait à la disponibilité (224) ;
l'identification d'au moins un dispositif d'équilibrage de charge de la pluralité de dispositifs d'équilibrage de charge ayant au moins une contrainte de fonctionnement parmi les contraintes de fonctionnement reçues qui corrèle avec l'écart,
dans lequel l'identification inclut l'agrégation en temps réel d'un ou de plusieurs dispositifs d'équilibrage de charge identifiés de la pluralité de dispositifs d'équilibrage de charge de telle sorte qu'une somme totale de valeurs correspondant à une capacité de consommation de puissance de chaque dispositif d'équilibrage de charge respectif inclus dans l'agrégation soit substantiellement égale à l'écart (226) ; et
la commande sélective de la consommation de puissance de l'au moins un dispositif d'équilibrage de charge (228) identifié afin de minimiser l'écart en commandant l'au moins un dispositif d'équilibrage de charge identifié soit pour augmenter, soit pour diminuer la consommation de puissance.

8. Le procédé de la revendication 7, comprenant en outre l'un quelconque ou plusieurs des points suivants :
(a) l'utilisation d'une ou de plusieurs techniques de modélisation statistique afin de déterminer au moins une contrainte de fonctionnement associée à au moins un dispositif d'équilibrage de charge ; et
(b) le transfert d'au moins une portion d'une charge de calcul associée à la réception de l'au moins une contrainte de fonctionnement à au moins un dispositif d'équilibrage de charge.

9. Le procédé de la revendication 7, comprenant en outre :
la détermination que la valeur de l'au moins un paramètre de fonctionnement correspond à une situation d'équilibre de charge où une quantité de puissance électrique générée par l'au moins une source de génération d'énergie dépasse une quantité de puissance électrique consommée par l'au moins un consommateur d'énergie ;
la génération d'un signal de commande pour chaque dispositif d'équilibrage de charge respectif parmi les dispositifs d'équilibrage de charge agrégés de telle sorte que le signal de commande amène chaque dispositif d'équilibrage de charge à augmenter la consommation de puissance ; et
la transmission du signal de commande à chaque dispositif d'équilibrage de charge respectif.

10. Le procédé de la revendication 7, comprenant en outre :
la détermination que la valeur de l'au moins un paramètre de fonctionnement correspond à une situation d'équilibre de charge où une quantité de puissance électrique générée par l'au moins une source de génération d'énergie est en dessous d'une quantité de puissance électrique consommée par l'au moins un consommateur d'énergie ;
la génération d'un signal de commande pour chaque dispositif d'équilibrage de charge respectif parmi les dispositifs d'équilibrage de charge agrégés de telle sorte que le signal de commande amène chaque dispositif d'équilibrage de charge à réduire la consommation de puissance ; et
la transmission du signal de commande à chaque dispositif d'équilibrage de charge respectif.
